(19) **Europäisches Patentamt**

**European Patent Office**

**Office européen des brevets**

(11) Publication number: **0 178 722**
**B1**

(12) **EUROPEAN PATENT SPECIFICATION**

(45) Date of publication of patent specification: **06.09.89**

(51) Int. Cl.⁴: **G 03 B 27/62, B 65 H 9/06**

(21) Application number: **85201609.6**

(22) Date of filing: **04.10.85**

(54) **Device for positioning originals in sheet form.**

(30) Priority: **10.10.84 NL 8403080**

(43) Date of publication of application:
**23.04.86 Bulletin 86/17**

(45) Publication of the grant of the patent:
**06.09.89 Bulletin 89/36**

(84) Designated Contracting States:
**DE FR GB NL**

(56) References cited:
**US-A-4 183 519**
**US-A-4 243 316**
**US-A-4 334 674**

**RESEARCH DISCLOSURE BULLETIN, vol. 198, October 1980, pages 407,408, Havant Hampshire, GB; M.J. RUSSEL: "Document feeder"**

(73) Proprietor: **Océ-Nederland B.V.**
**St. Urbanusweg 43**
**NL-5914 CC Venlo (NL)**

(72) Inventor: **Bruggers, Jan, Willem**
**Hogeschoorweg 16**
**NL-5914 CH Venlo (NL)**

(74) Representative: **Hanneman, Henri W.A.M. et al**
**Océ-Nederland B.V. Patents and Information**
**Postbus 101**
**NL-5900 MA Venlo (NL)**

## Description

This invention relates to a device for positioning an original in sheet form on the exposure table of a copying machine, comprising a movable ruler extending along an end of the exposure table and means for moving the ruler from and to a position in which a front edge of the ruler projects above the top surface of the exposure table in order to retain a sheet original arriving along the exposure table by its front edge and to position it thereon and for moving the ruler to and from a position in which the sheet original is released in order to be displaced further in the direction of and past the ruler.

Known devices of this kind have a ruler which is pivotable, for example about a pivot axis in their longitudinal direction, either for bringing the ruler onto the exposure table or pivoting away therefrom. In these conditions there is the risk that thin sheets may penetrate by their front edge at one or more places between the said retaining edge of the ruler and the exposure table, thus occupying an undesirable position and being damaged.

It has already been proposed, as in US Patent 4,183,519, to press resiliently downwards onto the exposure table a number of discrete fingers operating as a ruler. To obviate the said risk, there must be a fairly considerable spring force applied to said fingers, but in that case the sharp bottom edge of the retaining edge of the fingers scrapes over the exposure table, and this may result in wear particularly of said bottom edge.

US patent 4 334 684 discloses positioning devices in which a ruler is disposed to an end edge of a table and is slidable along the table's end edge up to an upright position in which its top part projects above the table surface and upto a downwardly retracted position, in which position the documents are retained and can pass respectively. However, thinner documents, and even thicker documents, particularly if they are flexible, may slide between the table and the ruler, be clamped in a badly positioned state, and be damaged. A similar positioning device is disclosed in IBM Technical Disclosure Bulletin *17*, No. 4 (September 1974), p. 1131 and *21*, No. 6 (November 1978), pp. 2222 and 2223.

The object of the invention is to remedy this, and to this end, a device of the kind referred to in the preamble is characterised according to the invention in that the exposure table has a recessed part comprising a substantially vertical side wall, a support plane and a plane inclining downwards from the support plane towards the end of the table, and in that the ruler, in the position for retaining an original, is supported by the support plane and lies against the side wall, and fits therewith, with its front edge adjacent to the side wall and projecting above the top surface of the table, and in the position for releasing an original, is supported by the inclining plane such that the top surface of the ruler does not extend over the top surface of the table.

The said disadvantages of the known devices are thus obviated by a very easily applied step.

It should be noted that Research Disclosure Bulletin, October 1979, pp, 587—590, discloses a device in which the exposure table also has a recessed part but in which the ruler bears against the transitional edge from the flat exposure table to the upright wall of the recess in order to form a clamping wedge for the documents. The recessed part accommodates a reinforcing part of the ruler with considerable play and also serves to receive a movable guide surface which can pivot in order to be brought into the path of returning documents, of which it is required to copy two sides. The accuracy of the positioning generally is open to criticism, while here again thin sheets may slide too far by their front edge between that transitional edge and the ruler.

Upon application of the invention, the side wall of the recessed part and the front edge fitting in the recessed part, are preferably situated in one plane substantially perpendicular to the surface of the exposure table.

Preferably, the positioning device is so constructed that the means for bringing the ruler into the position for retaining a document press said front edge against said side wall.

The invention will now be explained in detail with reference to the accompanying drawings wherein:

Fig. 1 is a schematic front view of the positioning device according to the invention with the ruler in the position for positioning a sheet.

Fig. 2 represents a part of the device according to Fig. 1 with the ruler in the position for allowing a sheet to pass.

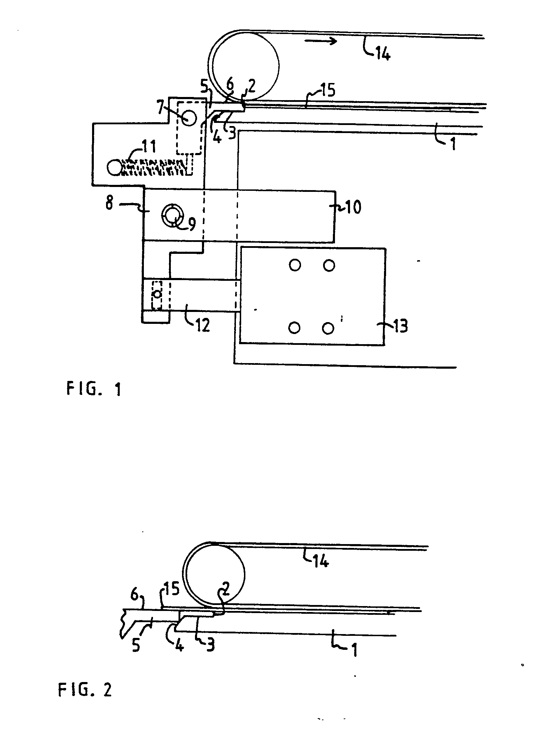

The copying machine exposure table 1, which may for example consist of a glass plate, is provided near one end with a recessed part, an upright wall 2, a support plane 3 and a part 4 which slopes obliquely downwards from the recessed part to the end of the table. A ruler 5 presses on the support plane 3 and against the upright wall 2 and its top surface 6 projects above the surface of the exposure table 1. The ruler 5 extends over the entire width of the exposure table 1 and thus forms an upright edge along the table 1, against which edge a sheet original fed over the exposure table 1 is positioned. The ruler 5 is rotatably fixed to a pin 7 which projects from a profile 8. Profile 8 is rotatable about a spindle 9 carried by a plate 10 secured to the frame of the copying machine. A spring 11 stretched between the ruler 5 and the profile 8 presses the ruler 5 against the support plane 3 of the exposure table 1. At the bottom the profile 8 is connected to the arm 12 of a solenoid 13. In the position shown in Fig. 1, the arm 12 in response to a spring present in the solenoid presses against the profile 8, so that the upright edge of the ruler 5 is pressed against the upright wall 2 of the exposure table 1. A conveyor belt 14 runs over the exposure table 1 in the direction indicated by an arrow, the conveyor feeding a sheet original 15 over the exposure table 1 and positioning it against the upright edge of the ruler 5. After the original has been positioned, it is exposed to light one or more times. After exposure, the solenoid 13 is energized, so that arm 12 moves to the right, with the consequence that the profile 8 rotates in the counterclockwise direction about the spindle 9. The ruler 5 is thus moved to the left and finally occupies the position represented in Fig. 2. The original lying on the exposure table 1 is now taken away by the conveyor belt 14 over the top surface 6 of the ruler 5. After the original has been taken away, the solenoid 13 is de-energized, so that the arm 12 is moved to the left by spring pressure and the ruler 5 is returned to its initial position.

Of course, all kinds of modifications can be made to the above-described construction. Thus it will be apparent that the above-described mechanism for moving the ruler can be replaced by other known mechanisms, e.g. as described in the said US Patent 4,183,519.

**Claims**

1. A device for positioning an original in sheet form on the exposure table (1) of a copying machine, comprising a movable ruler (5) extending along an end of the exposure table (1) and means (8, 11, 12, 13) for moving the ruler from and to a position in which a front edge of the ruler projects above the top surface of the exposure table (1) in order to retain a sheet original (15) arriving along the exposure table (1) by its front edge and to position it thereon and for moving the ruler to and from a position in which the sheet original (15) is released in order to be displaced further in the direction of and past the ruler, characterised in that the exposure table (1) has a recessed part comprising a substantially vertical side wall (2), a support plane (3) and a plane (4) inclining downwards from the support plane (3) towards the end of the table (1), and in that the ruler (5), in the position for retaining an original, is supported by the support plane (3) and lies against the side wall (2) and fits therewith, with its front edge adjacent to the side wall and projecting above the top surface of the table, and in the position for releasing an original, is supported by the inclining plane (4) such that the top surface (6) of the ruler (5) does not extend over the top surface of the table (1).

2. A device according to claim 1, characterised in that said front edge and said side wall lie in one plane which in the position for retaining a sheet original (15) extends substantially perpendicularly to the plane of the exposure table (1).

3. A device according to claim 1 or 2, characterised in that the means (8, 11, 12, 13) for bringing the ruler (5) into the position for retaining a sheet original (15) press said front edge against said side wall (2).

**Patentansprüche**

1. Vorrichtung zum Positionieren einer blattförmigen Vorlage auf der Vorlagenbühne (1) eines Kopiergerätes, mit einem sich längs eines Endes der Vorlagenbühne (1) erstreckenden beweglichen Lineal (5) une Mitteln (8, 11, 12, 13) zum Bewegen des Lineals aus einer und in eine Position, in der eine vordere Kante des Lineals über die obere Oberfläche der Vorlagenbühne (1) hinausragt, um ein längs der Vorlagenbühne (1) zugeführtes Vorlagenblatt (15) mit seiner vorderen Kante festzustellen und auf der Vorlagenbühne zu positionieren, und zum Bewegen des Lineals in eine und aus einer Position, in der das Vorlagenblatt (15) freigegeben wird, so daß es weiter in Richtung auf das Lineal zu und an diesem vorbei bewegt werden kann, dadurch gekennzeichnet, daß die Vorlagenbühne (1) einen zurückspringenden Teil mit einer im wesentlichen vertikalen Seitenwand (2), eine Stützfläche (3) und eine von der Stützfläche (3) aus zum Ende der Vorlagenbühne (1) hin abwärts geneigte Fläche (4) aufweist und daß das Lineal (5) in der Position zum Halten einer Vorlage durch die Stützfläche (3) abgestützt wird und mit seiner der Seitenwand zugewandten und über die obere Oberfläche der Vorlagenbühne vorspringenden vorderen Kante paßgenau an der Seitenwand (2) anliegt, während es in seiner Position zur Freigabe einer Vorlage durch die geneigte Fläche (4) derart abgestützt wird, daß die obere Oberfläche (6) des Lineals (5) nich über die obere Oberfläche der Vorlagenbühne (1) hinausreicht.

2. Vorrichtung nach Anspruch 1, dadurch gekennzeichnet, daß die vordere Kante und die Seitenwand in einer Ebene liegen, die in der Position zum Halten eines Vorlagenblattes (15) im wesentlichen rechtwinklig zur Ebene der Vorlagenbühne (1) verläuft.

3. Vorrichtung nach Anspruch 1 oder 2, dadurch gekennzeichnet, daß die Mittel (8, 11, 12, 13) zum Überführen des Lineals (5) in die Position zum Halten eines Vorlagenblattes (15) die vordere Kante gegen die Seitenwand (2) andrücken.

**Revendications**

1. Dispositif pour positionner un original en forme de feuille sur la table d'exposition (1) d'une machine de reproduction, comprenant une règle mobile (5) s'étendant le long d'une extrémité de la table d'exposition (1) et des moyens (8, 11, 12, 13) qui permettent de déplacer cette règle à partir d'une position, et vers celle-ci, dans laquelle un bord avant de la règle fait saillie au-dessus de la surface supérieure de la table d'exposition (1) afin de retenir, par sa tranche aval, un original en feuille (15) arrivant le long de cette table d'exposition (1) et afin de le positionner sur celle-ci, et qui permettent de déplacer la règle vers une position, et à partir de celle-ci, dans laquelle l'original en feuille (15) est libéré afin d'être déplacé plus loin en direction de la règle et en passant devant celle-ci, caractérisé en ce que la table d'exposition (1) comporte une partie en retrait présentant une paroi latérale pratiquement verticale (2), un plan de support (3) et un plan (4) s'inclinant vers le bas à partir de ce plan de support (3) en direction de l'extrémité de la table (1), et en ce que la règle (5), dans la position destinée à retenir un original, est supportée par le plan de support (3) et repose contre la paroi latérale (2) en s'y adaptant, avec son bord avant contigu à la paroi latérale et faisant saillie au-dessus de la surface supérieure de la table, et, dans la position destinée à libérer un original, est supportée par le plan incliné (4) de façon telle que la surface supérieure (6) de cette règle (5) ne s'étende pas au-dessus de la surface supérieure de la table (1).

2. Dispositif suivant la revendication 1, caractérisé en ce que ce bord avant et cette paroi latérale se trouvent dans un seul plan qui, dans la position permettant de retenir un original en feuille (15), s'étend pratiquement perpendiculairement au plan de la table d'exposition (1).

3. Dispositif suivant la revendication 1 ou 2, caractérisé en ce que les moyens (8, 11, 12, 13) destinés à placer la règle (5) dans la position permettant de retenir un original en feuille (15) appuient ce bord avant contre cette paroi latérale (2).

FIG. 1

FIG. 2